# EUROPÄISCHE PATENTSCHRIFT

(11) **EP 1 803 936 B1**
(45) Veröffentlichungstag und Bekanntmachung des Hinweises auf die Patenterteilung: **19.11.2008**
(21) Anmeldenummer: 06021243.8
(22) Anmeldetag: 10.10.2006
(51) Int. Cl.: F04B 35/04, F04B 49/02, F04B 49/06

(54) **Verfahren zur Ermittlung einer Kompressorumgebungstemperatur und Kompressoranordnung zur Durchführung des Verfahrens**
Compressor and method for determining the ambient temperature of the compressor
Dispositif et procédé pour déterminer la température ambiante d'un compresseur

(30) Priorität: 27.12.2005 DE 102005062571
(43) Veröffentlichungstag der Anmeldung: 04.07.2007
(73) Patentinhaber: WABCO GmbH, 30453 Hannover (DE)
(72) Erfinder: Bodet, Marc-Michel, 30989 Northen (DE); Meier, Jörg, 31840 Hessisch Oldendorf (DE)
(74) Vertreter: Günther, Constantin

(56) Entgegenhaltungen:
- EP-A2- 1 246 348
- EP-A2- 1 253 321
- DE-A1- 3 143 702
- DE-A1- 3 822 172
- US-A1- 2003 097 849

## Beschreibung

Die Erfindung betrifft ein Verfahren zur Ermittlung einer Kompressorumgebungstemperatur eines Druckluftkompressors für eine Personenkraftwagenluftfederung sowie eine Kompressoranordnung einer Personenkraftwagenluftfederung zur Durchführung des vorgenannten Verfahrens.

Es sind allgemein Druckluftkompressoren für Personenkraftwagen mit einer Luftfederung bekannt. Um einer Gefahr einer eigenen thermischen Überlastung vorzubeugen, weisen diese Kompressoren eine eingeschränkte Einschaltdauer in Abhängigkeit einer Umgebungstemperatur auf. Ohne Kenntnis der aktuellen Umgebungstemperatur muss von einer grundsätzlich in Frage kommenden maximalen Umgebungstemperatur am Kompressoreinbauort ausgegangen werden. Die maximale Umgebungstemperatur kann in einem Bereich von 80 °C liegen, so dass sich die Einschaltdauer des Kompressors in sehr vielen Fällen, nämlich immer dann, wenn diese hohe Umgebungstemperatur nicht vorliegt, in unnötiger Weise reduziert. Bei den bekannten Druckluftkompressoren wird die Umgebungstemperatur entweder vergleichsweise aufwendig mittels eines eigenen Temperatursensors am Kompressor gemessen, oder es wird auf eine Fahrzeugumgebungstemperaturinformation, die beispielsweise über einen Fahrzeugdatenbus zur Verfügung steht, eines Fahrzeugtemperatursensors zurückgegriffen; die Fahrzeugumgebungstemperaturinformation weist regelmäßig aufgrund einer üblicherweise räumlich von dem Kompressor entfernten Anordnung des Fahrzeugtemperatursensors, der zudem nicht selten völlig anderen thermischen Umgebungsbedingungen unterliegt als der Kompressor, in einem Bereich eines vorderen Stoßfängers eines Personenkraftwagens oder im Bereich eines Außenspiegels eine nur eingeschränkte Genauigkeit bezüglich einer Angabe der Umgebungstemperatur des Kompressors auf.

Aus EP 1 253 321 A2 ist ein Verfahren zu einer Steuerung eines Kompressors bekannt, der zu einer Druckmittelförderung in eine Druckmittelanlage geeignet ist, wobei die Förderung des Druckmittels in die Druckmittelanlage in Abhängigkeit von einem Temperatursignal ein-und ausschaltbar ist. Das Temperatursignal kann durch einen Temperatursensor, der an einer besonders temperaturempfindlichen Stelle des Kompressors angeordnet ist, ermittelt werden. Außerdem kann eine Ermittlung eines Temperaturwertes über eine thermische Modellbildung auf rechnerischem Wege vorgesehen sein. Gemäß einer bevorzugten Ausführung sind beide vorgenannten Varianten, Temperatursensor und thermische Modellbildung, vorgesehen, wobei in einem Regelfall auf das Signal des Temperatursensors zugegriffen wird und nur bei einem Defekt oder einer Störung des Temperatursensors die thermische Modellbildung ersatzweise zu einer Bestimmung des Temperaturwertes herangezogen wird.

Außerdem ist aus DE 38 22 172 C2 ein Verfahren zu einem Schutz eines Hydraulikkreislaufes vor Überlastung bekannt. In dem Hydraulikkreislauf wird ein elektrohydraulisches Ventil durch einen Verstellmagneten angesteuert. Ein elektrischer Widerstand des Verstellmagneten wird fortlaufend gemessen und einer Vergleichseinheit in einem elektrischen Steuer- und Regelsystem zugeführt. Bei Überschreiten eines einer bestimmten Temperatur eines Hydraulikmediums entsprechenden vorgegebenen Grenzwiderstandes werden von dem Steuer- und Regelsystem einer Überlastung entgegenwirkende Maßnahmen eingeleitet. Die Temperatur des Hydraulikmediums wird durch Messung des sich infolge einer Fremdaufheizung erhöhenden Widerstandes des Verstellmagneten erfasst.

Die US 2003/0097849 beschreibt eine Steuereinrichtung für den Kompressor einer Klimaanlage. Hierbei kann die Temperatur des Kompressors ermittelt werden, indem der Spulenwiderstand eines Steuerventils gemessen, aus dem gemessenen Spulenwiderstand die Spulentemperatur und aus der Spulentemperatur die Kompressortemperatur ermittelt wird.

Vor diesem Hintergrund liegt der Erfindung die Aufgabe zugrunde, ein Verfahren der eingangs genannten Art anzugeben, das eine Temperaturermittlung mit hoher Genauigkeit bei vereinfachtem Aufbau des Kompressors ermöglicht. Zudem liegt der Erfindung die Aufgabe zugrunde, eine einen einfachen Aufbau aufweisende Kompressoranordnung zur Durchführung des Verfahrens zu schaffen.

Die erstgenannte Aufgabe wird gelöst mit einem Verfahren nach Anspruch 1.

Die Unteransprüche enthalten besonders zweckmäßige und vorteilhafte Weiterbildungen der Erfindung.

Von großem Vorteil bei dem erfindungsgemäßen Verfahren ist, dass eine an dem Kompressor vorhandenen Spule zur Ermittlung der Kompressorumgebungstemperatur, das heißt der Umgebungstemperatur am Einbauort des Kompressors, mit verwendet werden kann. Damit erfolgt nicht nur eine Doppelnutzung der Spule, sondern die Ermittlung der Kompressorumgebungstemperatur geht zudem von einer Temperaturbestimmung in unmittelbarer Nähe des Kompressors aus. Auf einen kostenintensiven und als zusätzliches Bauteil grundsätzlich ausfallgefährdeten Temperatursensor, wie er aus dem Stand der Technik bekannt ist, kann vollständig verzichtet werden. Das ist insbesondere bei einem Kompressor für Kraftfahrzeuge aufgrund der in der Kraftfahrzeugproduktion regelmäßig vorliegenden Fertigung in großen Serien, bei der Kosteneinflüsse von hoher Bedeutung sind, von großem Vorteil. Es kann mit der Erfindung außerdem auf eine aufwendige und grundsätzlich erhebliche Toleranzen aufweisende Umrechnung einer Fahrzeugumgebungstemperaturinformation eines an einem anderen Ort als der Kompressor verbauten Fahrzeugsensors verzichtet werden. Da die Größe eines elektrischen Widerstandes abhängig ist von der Temperatur, kann aus dem gemessenen Spulenwiderstand die tatsächliche Spulentemperatur bestimmt - beispielsweise mit einer in dem Steuergerät hinterlegten Temperatur-Widerstands-Funktion berechnet - werden. Die Erfindung berücksichtigt weiterhin vorteilhaft, dass die tatsächliche Spulentemperatur nicht unmittelbar die Kompressorumgebungstemperatur angibt; eine genaue Auskunft über die Kompressorumgebungstemperatur ergibt sich anhand des Temperaturverhaltens der Spule am Kompressoreinbauort, das heißt anhand des Temperaturverhaltens der Spule im eingebauten Zustand, das von dem Spulentemperaturmodell abgebildet wird. Das Spulentemperaturmodell der Spule kann zum Beispiel empirisch erstellt und in dem Steuergerät abgespeichert werden. Neben einem Temperaturverhalten der Spule selbst, das zum Beispiel ein Aufwärm- und Abkühlverhalten der Spule am Kompressoreinbauort umfassen kann, kann das Spulentemperaturmodell beispielsweise auch ein Temperaturverhalten des Kompressors am Kompressoreinbauort und/oder An- und Ausschaltzustände und -zeiten von Spule und/oder Kompressor berücksichtigen. Mit Hilfe der einfachen und präzisen Ermittlung der Kompressorumgebungstemperatur nach dem erfindungsgemäßen Verfahren kann insbesondere die Einschaltdauer des Kompressors exakt geregelt und so der Kompressor vor Beschädigung durch Überhitzung geschützt werden. Gleichzeitig kann eine Überdimensionierung hinsichtlich Temperaturfestigkeit des Kompressors vermieden werden und der Kompressor somit einen kostengünstigeren Aufbau aufweisen. Vorteilhaft muss bei dem erfindungsgemäßen Verfahren die Messung des Spulenwiderstandes nicht fortlaufend erfolgen, sondern sie kann auf einen bestimmten Zeitpunkt, zum Beispiel vor einem vorgesehenen Wiedereinschalten des Kompressors, beschränkt sein, wobei es auch denkbar ist, eine Messung regelmäßig und in festen Abständen vorzunehmen. Besonders günstig ist es, wenn die Temperaturabhängigkeit eines Spulenwiderstandes einer Spulenwicklung eines Magnetventils, insbesondere eines Entlüftungsventils, eines elektrisch angetriebenen Kompressors für eine Personenkraftwagenluftfederung für die Ermittlung der Kompressorumgebungstemperatur genutzt wird. Mit dem erfindungsgemäßen Verfahren kann eine Messung des Spulenwiderstandes und eine Auswertung von Spulenwiderstandsmesswerten vorteilhaft dann erfolgen, wenn der Betriebszustand der Anordnung mit Kompressor und Spule dieses zulässt. Die Spulenwiderstandsmesswerte können in einfacher Weise plausibilisiert und korrigiert werden.

Vorteilhaft kann ein auch zeitlicher Einfluss des Ansteuerungszustandes der Spule, das heißt eine einem Anschalten der Spule entsprechende Ansteuerung und eine einem Ausschalten der Spule entsprechende Nichtansteuerung, korrigierend für die Bestimmung der Kompressorumgebungstemperatur hinzugezogen werden, wenn eine Spulenmesszeitdifferenz zwischen einem Messzeitpunkt der Messung des Spulenwiderstandes und einem Ende einer letztmaligen Ansteuerung oder Nichtansteuerung der Spule bestimmt wird. Von besonderer Bedeutung ist dabei die Zeitdifferenz zwischen dem Messzeitpunkt und dem jeweils letzten Ansteuerungsvorgang der Spule, das heißt beispielsweise im Falle einer zum Messzeitpunkt ausgeschalteten Spule die Zeitdifferenz zwischen dem Messzeitpunkt und dem Ende der letzten Ansteuerung.

In entsprechender Weise ist es von Vorteil, wenn eine Kompressormesszeitdifferenz zwischen dem Messzeitpunkt und einem Ende einer letztmaligen Ansteuerung oder Nichtansteuerung des Kompressors bestimmt wird, so dass ein Einfluss, insbesondere ein zeitlicher Einfluss, des Ansteuerungszustandes des Kompressors korrigierend für die Bestimmung der Kompressorumgebungstemperatur hinzugezogen werden kann.

Vorzugsweise wird bei einer Nichtansteuerung der Spule und des Kompressors zum Messzeitpunkt und einer eine in dem Steuergerät abgelegte Spulenmesszeitgrenzdifferenz überschreitenden Spulenmesszeitdifferenz und einer eine in dem Steuergerät abgelegte Kompressormesszeitgrenzdifferenz überschreitenden Kompressormesszeitdifferenz die Kompressorumgebungstemperatur gleich der Spulentemperatur gesetzt. Die Spulenmesszeitgrenzdifferenz und die Kompressormesszeitgrenzdifferenz können dabei gleich groß sein; sie geben jeweils den Zeitraum einer Nichtansteuerung der Spule oder des Kompressors an, der ausreicht, um von einem nicht mehr bestehenden Einfluss der Spule beziehungsweise des Kompressors auf die Spulentemperatur ausgehen zu können. Waren zum Messzeitpunkt der Messung des Spulenwiderstandes die Spule und der Kompressor ausreichend lange nicht angesteuert, zum Beispiel über einen Zeitraum von mehr als 30 min, das heißt die Spulenmesszeitgrenzdifferenz und die Kompressormesszeitgrenzdifferenz betragen jeweils 30 min, so stimmt die Spulentemperatur hinreichend genau mit der Kompressorumgebungstemperatur überein.

Es ist grundsätzlich denkbar, dass die Spulentemperatur von dem Steuergerät mittels einer in dem Steuergerät hinterlegten Formel aus dem gemessenen Spulenwiderstand berechnet wird, die die konkrete Temperaturabhängigkeit, die insbesondere von dem Spulenwerkstoff beeinflusst wird, des Spulenwiderstandes wiedergibt. Vorteilhaft besonders einfach und schnell kann das erfindungsgemäße Verfahren hingegen ausgebildet sein, wenn in dem Steuergerät eine Spulenwiderstandswerte und diesen zugeordnete Spulentemperaturwerte aufweisende Tabelle abgelegt ist und wenn die Spulentemperatur anhand eines dem gemessenen Spulenwiderstand entsprechenden Spulenwiderstandswertes aus der Tabelle ausgelesen wird. Spulenwiderstandswert-Spulentemperaturwert-Paarungen der Tabelle können beispielsweise empirisch ermittelt oder aus einer vorgenannten Berechnungsformel berechnet worden sein.

Die Präzision des erfindungsgemäßen Verfahrens kann zusätzlich wesentlich erhöht werden, wenn gemäß einer anderen vorteilhaften Weiterbildung der Erfindung der gemessene Spulenwiderstand anhand eines in dem Steuergerät abgelegten Widerstandskalibrierwertes vor der Bestimmung der Spulentemperatur korrigiert wird. Grundsätzlich ist der elektrische Widerstand einer die Spule und Zuleitungen aufweisenden Messstrecke toleranzbehaftet. Sich daraus ergebende Widerstandstoleranzen können zu einer Einschränkung der Messgenauigkeit führen. Mit einer Kalibrierung des Spulenwiderstandes können vorteilhaft Schwankungen des Nennwiderstandes, hervorgerufen beispielsweise von Widerstandstoleranzen der Spule, Übergangswiderständen von Steckverbindungen und Widerständen einer Verkabelung, von dem Steuergerät eingelernt und in einem nichtflüchtigen Speicher des Steuergerätes abgelegt sein. Im Einzelnen kann zur Kalibrierung der Spulenwiderstand bei bekannter Temperatur gemessen und als Kalibrierwert in dem Steuergerät gespeichert werden. Ausgehend von diesem gespeicherten Wert kann dann jede Widerstandsabweichung auf eine Temperatur zurückgeführt werden. Die Kalibrierung kann beispielsweise automatisch bei einer Herstellung und Inbetriebnahme eines Kraftfahrzeugs in einer Montagehalle erfolgen, die Temperaturen in der Montagehalle können regelmäßig als bekannt vorausgesetzt werden. Das Steuergerät kann in diesem Fall einen Widerstandsmesswert als Referenz für eine Temperatur von zum Beispiel 25 °C aufnehmen. Weiterhin ist auch eine manuelle Eingabe, beispielsweise über einen Diagnosedienst, der dem Widerstandsmesswert zugehörigen Temperatur denkbar. Eine Möglichkeit der manuellen Temperatureingabe ist insbesondere bei Nachrüstung oder Instandsetzung des Kompressors von Vorteil. Die Kalibrierwerte können in vorteilhafter Weise zusätzlich einer Plausibilitätsprüfung unterzogen werden. Dazu können dem Steuergerät zu erwartende Widerstandsbereiche in der Messstrecke mitgeteilt werden; alternativ können diese zu erwartenden Widerstandsbereiche auch bereits grundsätzlich in dem Steuergerät gespeichert sein. Wird danach eine Widerstandskalibrierung in Gang gesetzt, kann ein dann gemessener Widerstandswert mit in dem Steuergerät hinterlegten Werten verglichen werden. Liegt der gemessene Widerstandswert außerhalb von zu akzeptierenden Toleranzwerten, so kann eine Kalibrierung abgelehnt werden.

Die Kompressorumgebungstemperatur kann mit hoher Genauigkeit in besonders einfacher Weise und ohne nennenswerten Rechenaufwand aus der Spulentemperatur bestimmt werden, wenn gemäß einer anderen vorteilhaften Weiterbildung der Erfindung das Spulentemperaturmodell von einer Zeitdauer einer Ansteuerung oder Nichtansteuerung der Spule abhängige, jeweils einer Kompressorumgebungstemperatur entsprechende Spulentemperaturverläufe aufweist.

Eine exakte Messung der Spulentemperatur ohne Beeinflussung des Betriebs der Spule kann dadurch erreicht werden, dass gemäß einer anderen vorteilhaften Weiterbildung der Erfindung die Messung des Spulenwiderstandes bei Nichtansteuerung der Spule erfolgt.

Die Genauigkeit der Ermittlung der Kompressorumgebungstemperatur kann vorteilhaft weiter dadurch erhöht werden, dass in dem Steuergerät ein ein Temperaturverhalten des Kompressors abbildendes und eine Abhängigkeit der Spulentemperatur von einer Kompressortemperatur angebendes Kompressortemperaturmodell abgelegt ist und dass aus der Spulentemperatur die Kompressorumgebungstemperatur mittels des Spulentemperaturmodells und des Kompressortemperaturmodells bestimmt wird. Das ist insbesondere deshalb von Vorteil, weil das Abkühlverhalten der Spule, insbesondere einer Magnetventilspule eines Entlüftungsventils, nicht nur umgebungstemperaturabhängig ist, sondern auch von der Kompressortemperatur beeinflusst wird. Mit dem zusätzlichen, in dem Steuergerät abgelegten Kompressortemperaturmodell lassen sich insbesondere Wechselwirkungen zwischen Spule, insbesondere des Entlüftungsventils, und Kompressor berücksichtigen.

Von besonderem Vorteil ist es, wenn das Spulentemperaturmodell von einer Zeitdauer einer Ansteuerung oder Nichtansteuerung des Kompressors abhängige, jeweils einer Kompressorumgebungstemperatur entsprechende Spulentemperaturverläufe aufweist. So kann die Aussagegenauigkeit des Spulentemperaturmodells weiter erhöht werden, da das Spulentemperaturmodell dann auch Einflüsse einer Kompressoransteuerung auf die Spulentemperatur mit umfasst.

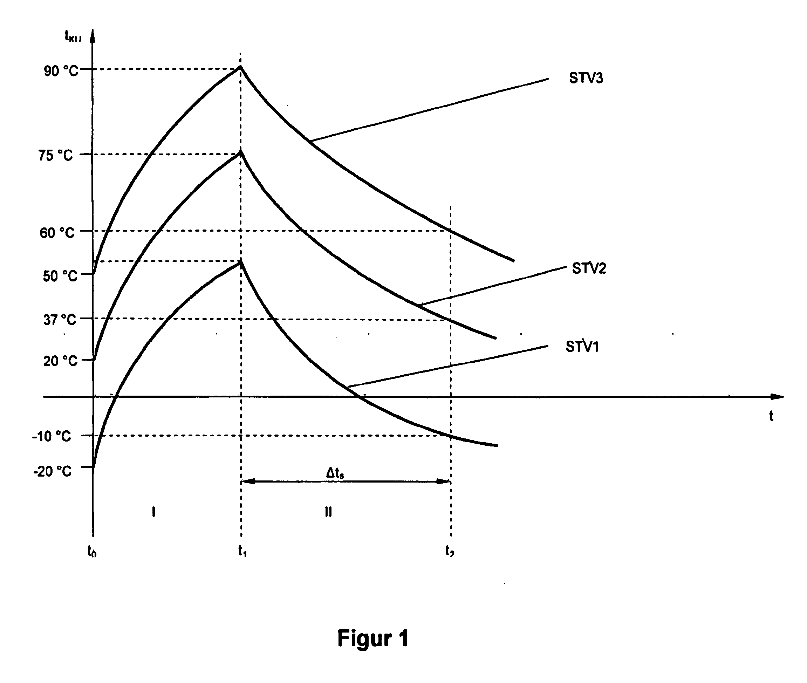

Die oben zweitgenannte Aufgabe wird gelöst mit einer Kompressoranordnung nach Anspruch 11. Die Erfindung lässt zahlreiche Ausführungsformen zu. Zur weiteren Verdeutlichung ihres Grundprinzips wird eine davon anhand der beigefügten Zeichnung näher beschrieben. Die Zeichnung zeigt in
- Figur 1: ein Temperatur-Zeit-Diagramm mit Spulentemperaturverläufen einer Spule eines Entlüftungsventils eines Kompressors.

Figur 1 zeigt in Form eines schematisierten Temperatur-Zeit-Diagrammes ein einfaches Spulentemperaturmodell einer als Magnetspule ausgebildeten Spule eines Magnetventils, und zwar eines Entlüftungsventils eines als Druckluftkompressor für ein Fahrzeug, insbesondere ein Kraftfahrzeug, ausgebildeten Kompressors. Die Spule und der Kompressor sind Bestandteil einer Kompressoranordnung, die auch ein elektronisches Steuergerät aufweist, in dem das Spulentemperaturmodell abgelegt ist.

In dem Temperatur-Zeit-Diagramm ist eine Kompressorumgebungstemperatur t_{KU}, das heißt eine Umgebungstemperatur des Kompressors an einem Einbauort des Kompressors im Fahrzeug, über einer Zeit t entsprechend einem x-y-Koordinatensystem aufgetragen. Entlang der eine Zeitachse bildenden x-Achse ist ein erster Bereich I, der eine Zeitdauer einer Ansteuerung der Spule von einem Zeitpunkt t₀ bis zu einem Zeitpunkt t₁ angibt, und ein zweiter Bereich II, der eine Zeitdauer einer Nichtansteuerung der Spule von dem Zeitpunkt t₁ an angibt und über einen Messzeitpunkt t₂ hinausreicht, eingetragen. In dem ersten Bereich I ist die Spule somit angeschaltet, in dem zweiten Bereich II ist sie ausgeschaltet.

Weiterhin ist in das Temperatur-Zeit-Diagramm eine Spulentemperatur in Form von drei Spulentemperaturverläufen STV1, STV2, STV3, die jeweils einer bestimmten Kompressorumgebungstemperatur entsprechen, eingezeichnet. Es ist zu erkennen, dass ein in dem Diagramm unten liegender, erster Spulentemperaturverlauf STV1 einer Kompressorumgebungstemperatur von -20 °C entspricht, ein mittlerer, zweiter Spulentemperaturverlauf STV2 einer Kompressorumgebungstemperatur von 20 °C und ein oben liegender, dritter Spulentemperaturverlauf STV3 einer Kompressorumgebungstemperatur von 50 °C.

Zu einer Bestimmung einer tatsächlichen Spulentemperatur der Spule wird ein temperaturabhängiger Spulenwiderstand mittels des Steuergerätes gemessen; bevorzugt erfolgt die Messung des Spulenwiderstandes bei Nichtansteuerung der Spule. In dem Steuergerät ist eine Spulenwiderstandswerte und diesen zugeordnete Spulentemperaturwerte aufweisende Tabelle abgelegt; die Tabelle kann zum Beispiel für eine 12V-Kupferspule des Magnetventils folgenden Inhalt haben:

| **Spulenwiderstandswert** | **Spulentemperaturwerte** |
|---|---|
| 12,160 Ω | -40 °C |
| 13,44 Ω | -20 °C |
| 14,72 Ω | 0 °C |
| 16 Ω | 20 °C |
| 17,28 Ω | 40 °C |
| 18,56 Ω | 60 °C |
| 19,84 Ω | 80 °C |

Die Spulentemperatur wird derart aus dem gemessenen Spulenwiderstand bestimmt, dass die Spulentemperatur anhand eines dem gemessenen Spulenwiderstand entsprechenden Spulenwiderstandswertes aus der oben stehenden Tabelle ausgelesen wird. Ergibt die Messung des Spulenwiderstandes zum Beispiel 18,56 Ω, so beträgt die Spulentemperatur 60 °C.

Aus dieser Spulentemperatur wird die Kompressorumgebungstemperatur mittels des in dem Steuergerät abgelegten, ein Temperaturverhalten der in die Kompressorumgebung eingebauten Spule abbildenden und eine Abhängigkeit der Spulentemperatur von der Kompressorumgebungstemperatur angebenden Spulentemperaturmodells bestimmt. Dazu wird eine Spulenmesszeitdifferenz Δtₛ, die einen Zeitraum zwischen einem Messzeitpunkt t₂ (siehe Figur 1) der Messung des Spulenwiderstandes und einem ein Ende einer letztmaligen Ansteuerung oder Nichtansteuerung der Spule angebenden Zeitpunkt t₁ angibt, bestimmt. Da im vorliegenden Ausführungsbeispiel eine Messung des Spulenwiderstandes bei Nichtansteuerung der Spule erfolgt (siehe oben), liegt der Messzeitpunkt t₂ in dem zweiten Bereich II des Diagrammes nach Figur 1.

Unter Berücksichtigung des Spulentemperaturmodells nach Figur 1 erhält man ausgehend von dem Messzeitpunkt t₂ und der aus der Messung des Spulenwiderstandes gewonnenen Spulentemperatur von 60 °C eine ermittelte Kompressorumgebungstemperatur t_{KU} von 50 °C, da die Spulentemperatur von 60 °C bei dem Messzeitpunkt t₂ auf dem einer Kompressorumgebungstemperatur t_{KU} von 50 °C entsprechenden oben liegenden Spulentemperaturverlauf STV3 vorliegt. Mit Hilfe des Spulentemperaturmodells wird somit die Kompressorumgebungstemperatur in diesem Beispiel gegenüber der Spulentemperatur unter Berücksichtigung des Messzeitpunktes und der Ansteuerung oder Nichtansteuerung der Spule um -10 °C korrigiert.

Eine Ansteuerung der Spule entspricht einem Entlüftungsvorgang an dem Entlüftungsventil. Nach einem Ende jedes Entlüftungsvorganges kann die Kompressorumgebungstemperatur bestimmt werden. Wird entsprechend einem weiteren Beispiel nach einer Entlüftungszeit zu einem den ersten Bereich I beendenden Zeitpunkt t₁ durch Widerstandsmessung an der Spule eine Spulentemperatur von 90 °C bestimmt, so ergibt sich daraus gemäß dem Diagramm nach Figur 1 eine Kompressorumgebungstemperatur von 50 °C. Gemäß einem anderen Beispiel ergibt eine zu dem Messzeitpunkt t₂ aus einer Widerstandsmessung gewonnene Spulentemperatur von 37 °C eine Kompressorumgebungstemperatur t_{KU} von 20 °C.

### BEZUGSZEICHENLISTE

- I: Bereich
- II: Bereich

- STV1, STV2, STV3: Spulentemperaturverläufe
- t: Zeit
- t₀: Zeitpunkt
- t₁: Zeitpunkt
- t₂: Messzeitpunkt
- t_{KU}: Kompressorumgebungstemperatur
- Δts: Spulenmesszeitdifferenz

## Patentansprüche

1. Verfahren zur Ermittlung einer Kompressorumgebungstemperatur eines Druckluftkompressors für eine Personenkraftwagenluftfederung, der eine von einem elektrischen Strom durchflossene Spule aufweist, wobei ein temperaturabhängiger Spulenwiderstand der Spule gemessen wird, mittels eines elektronischen Steuergerätes aus dem gemessenen Spulenwiderstand eine Spulentemperatur bestimmt wird, und aus der Spulentemperatur die Kompressorumgebungstemperatur (t_{KU}) mittels eines in dem Steuergerät abgelegten, ein Temperaturverhalten der in die Kompressorumgebung eingebauten Spule abbildenden und eine Abhängigkeit der Spulentemperatur von der Kompressorumgebungstemperatur (t_{KU}) angebenden Spulentemperaturmodells bestimmt wird.

2. Verfahren nach Anspruch 1, **dadurch gekennzeichnet, dass** eine Spulenmesszeitdifferenz (Δt_{S}) zwischen einem Messzeitpunkt (t₂) der Messung des Spulenwiderstandes und einem Ende einer letztmaligen Ansteuerung oder Nichtansteuerung der Spule bestimmt wird.

3. Verfahren nach Anspruch 1 oder 2, **dadurch gekennzeichnet, dass** eine Kompressormesszeitdifferenz zwischen dem Messzeitpunkt und einem Ende einer letztmaligen Ansteuerung oder Nichtansteuerung des Kompressors bestimmt wird.

4. Verfahren nach Anspruch 2 und 3, **dadurch gekennzeichnet, dass** bei einer Nichtansteuerung der Spule und des Kompressors zum Messzeitpunkt (t₂) und einer eine in dem Steuergerät abgelegte Spulenmesszeitgrenzdifferenz überschreitenden Spulenmesszeitdifferenz (Δt_{S}) und einer eine in dem Steuergerät abgelegte Kompressormesszeitgrenzdifferenz überschreitenden Kompressormesszeitdifferenz die Kompressorumgebungstemperatur (t_{KU}) gleich der Spulentemperatur gesetzt wird.

5. Verfahren nach zumindest einem der vorangehenden Ansprüche, **dadurch gekennzeichnet, dass** in dem Steuergerät eine Spulenwiderstandswerte und diesen zugeordnete Spulentemperaturwerte aufweisende Tabelle abgelegt ist und dass die Spulentemperatur anhand eines dem gemessenen Spulenwiderstand entsprechenden Spulenwiderstandswertes aus der Tabelle ausgelesen wird.

6. Verfahren nach zumindest einem der vorangehenden Ansprüche, **dadurch gekennzeichnet, dass** der gemessene Spulenwiderstand anhand eines in dem Steuergerät abgelegten Widerstandskalibrierwertes vor der Bestimmung der Spulentemperatur korrigiert wird.

7. Verfahren nach zumindest einem der vorangehenden Ansprüche, **dadurch gekennzeichnet, dass** das Spulentemperaturmodell von einer Zeitdauer einer Ansteuerung oder Nichtansteuerung der Spule abhängige, jeweils einer Kompressorumgebungstemperatur entsprechende Spulentemperaturverläufe (STV1, STV2, STV3) aufweist.

8. Verfahren nach zumindest einem der vorangehenden Ansprüche, **dadurch gekennzeichnet, dass** die Messung des Spulenwiderstandes bei Nichtansteuerung der Spule erfolgt.

9. Verfahren nach zumindest einem der vorangehenden Ansprüche, **dadurch gekennzeichnet, dass** in dem Steuergerät ein ein Temperaturverhalten des Kompressors abbildendes und eine Abhängigkeit der Spulentemperatur von einer Kompressortemperatur angebendes Kompressortemperaturmodell abgelegt ist und dass aus der Spulentemperatur die Kompressorumgebungstemperatur mittels des Spulentemperaturmodells und des Kompressortemperaturmodells bestimmt wird.

10. Verfahren nach zumindest einem der vorangehenden Ansprüche, **dadurch gekennzeichnet, dass** das Spulentemperaturmodell von einer Zeitdauer einer Ansteuerung oder Nichtansteuerung des Kompressors abhängige, jeweils einer Kompressorumgebungstemperatur entsprechende Spulentemperaturverläufe aufweist.

11. Kompressoranordnung einer Personenkraftwagenluftfederung, zur Durchführung eines Verfahrens nach zumindest einem der vorangehenden Ansprüche, wobei die Kompressoranordnung einen Druckluftkompressor zur Aufnahme von Umgebungsluft und ein elektronisches Steuergerät aufweist, wobei der Druckluftkompressor eine elektrische Spule aufweist, die eine Magnetspule eines Magnetventils ist, und wobei ein temperaturabhängiger Spulenwiderstand der Spule mit dem Steuergerät messbar ist und das elektronische Steuergerät aus dem gemessenen Spulenwiderstand eine Spulentemperatur bestimmt, und das elektronische Steuergerät aus der Spulentemperatur die Kompressorumgebungstemperatur (t_{KU}) mittels eines in dem Steuergerät abgelegten, ein Temperaturverhalten der in die Kompressorumgebung eingebauten Spule abbildenden und eine Abhängigkeit der Spulentemperatur von der Kompressorumgebungstemperatur (t_{KU}) angebenden Spulentemperaturmodells bestimmt.

## Claims

1. Method of ascertaining the surrounding temperature of the compressor of a compressed-air compressor for a motor car air-suspension system, which compressor has a coil through which an electric current flows, wherein the temperature-dependent coil resistance of the coil is measured, the coil temperature is determined from the measured coil resistance by means of an electronic control unit, and from the coil temperature the surrounding temperature of the compressor (t_{KU}) is determined by means of a coil temperature model that is stored in the control unit, reproduces the temperature behaviour of the coil installed in the surroundings of the compressor and gives the dependency of the coil temperature upon the surrounding temperature of the compressor (t_{KU}).

2. Method according to claim 1, **characterized in that** a coil measurement time difference (Δtₛ) between the measurement time-point (t₂) of the measurement of the coil resistance and the end of the last activation or non-activation of the coil is determined.

3. Method according to claim 1 or 2, **characterized in that** a compressor measurement time difference between the measurement time-point and the end of the last activation or non-activation of the compressor is determined.

4. Method according to claim 2 and 3, **characterized in that** if the coil and the compressor are in a non-activated state at measurement time-point (t₂) and if the coil measurement time difference (Δtₛ) exceeds the coil measurement time limit difference stored in the control unit and the compressor measurement time difference exceeds the compressor measurement time limit difference stored in the control unit, the surrounding temperature of the compressor (t_{KU}) is set equal to the coil temperature.

5. Method according to at least one of the preceding claims, **characterized in that** in the control unit there is stored a table having coil resistance values and coil temperature values associated therewith, and the coil temperature is read out from the table with reference to the coil resistance value corresponding to the measured coil resistance.

6. Method according to at least one of the preceding claims, **characterized in that** prior to the determination of the coil temperature the measured coil resistance is corrected with reference to the resistance calibration value stored in the control unit.

7. Method according to at least one of the preceding claims, **characterized in that** the coil temperature model exhibits coil temperature curves (STV1, STV2, STV3) which are dependent upon the duration of an activation or non-activation of the coil and each corresponds to a surrounding temperature of the compressor.

8. Method according to at least one of the preceding claims, **characterized in that** the measurement of the coil resistance is effected during non-activation of the coil.

9. Method according to at least one of the preceding claims, **characterized in that** a compressor temperature model reproducing the temperature behaviour of the compressor and giving the dependency of the coil temperature upon the compressor temperature is stored in the control unit, and the surrounding temperature of the compressor is determined from the coil temperature by means of the coil temperature model and the compressor temperature model.

10. Method according to at least one of the preceding claims, **characterized in that** the coil temperature model exhibits coil temperature curves which are dependent upon the duration of an activation or non-activation of the compressor and each corresponds to a surrounding temperature of the compressor.

11. Compressor arrangement of a motor car air-suspension system, for carrying out a method in accordance with at least one of the preceding claims, wherein the compressor arrangement has a compressed-air compressor for taking in ambient air and has an electronic control unit, wherein the compressed-air compressor has an electrical coil which is the magnet coil of a solenoid valve, and wherein the temperature-dependent coil resistance of the coil is measurable with the control unit, and the electronic control unit determines the coil temperature from the measured coil resistance, and the electronic control unit determines from the coil temperature the surrounding temperature of the compressor (t_{KU}) by means of a coil temperature model that is stored in the control unit, reproduces the temperature behaviour of the coil installed in the surroundings of the compressor and gives the dependency of the coil temperature upon the surrounding temperature of the compressor (t_{KU}).

## Revendications

1. Procédé pour déterminer une température d'environnement de compresseur d'un compresseur d'air comprimé pour une suspension pneumatique d'un véhicule de tourisme, qui comprend une bobine traversée par un courant électrique, procédé d'après lequel on mesure pour la bobine, une résistance de bobine fonction de la température, on détermine, au moyen d'un appareil de commande électronique, à partir de la résistance de bobine mesurée, une température de bobine, et on détermine ensuite, à partir de la température de bobine, la température d'environnement de compresseur (t_{KU}), au moyen d'un modèle de température de bobine en mémoire dans l'appareil de commande, reproduisant un comportement de température de la bobine implantée dans l'environnement du compresseur, et indiquant une loi de variation de la température de bobine en fonction de la température d'environnement de compresseur (t_{KU}).

2. Procédé selon la revendication 1, **caractérisé en ce que** l'on détermine une différence de temps de mesure de bobine (Δtₛ) entre un instant de mesure (t₂) de la mesure de la résistance de bobine et une fin d'une dernière excitation ou non excitation de la bobine.

3. Procédé selon la revendication 1 ou 2, **caractérisé en ce que** l'on détermine une différence de temps de mesure de compresseur entre l'instant de mesure et une fin d'une dernière excitation ou non excitation du compresseur.

4. Procédé selon les revendications 2 et 3, **caractérisé en ce que** dans le cas d'une non excitation de la bobine et du compresseur à l'instant de mesure (t₂), et d'une différence de temps de mesure de bobine (Δtₛ) dépassant une différence limite de temps de mesure de bobine en mémoire dans l'appareil de commande, et d'une différence de temps de mesure de compresseur dépassant une différence limite de temps de mesure de compresseur en mémoire dans l'appareil de commande, on fixe la température d'environnement de compresseur (t_{KU}) égale à la température de bobine.

5. Procédé selon l'une au moins des revendications précédentes, **caractérisé en ce que** dans l'appareil de commande est mémorisé un tableau présentant des valeurs de résistance de bobine et des valeurs de température de bobine qui y sont associées, et **en ce que** la température de bobine est lue dans le tableau au regard d'une valeur de résistance de bobine correspondant à la résistance de bobine mesurée.

6. Procédé selon l'une au moins des revendications précédentes, **caractérisé en ce que** la résistance de bobine mesurée est corrigée à l'aide d'une valeur de calibrage de résistance en mémoire dans l'appareil de commande, avant la détermination de la température de bobine.

7. Procédé selon l'une au moins des revendications précédentes, **caractérisé en ce que** le modèle de température de bobine présente des lois de variation de température de bobine (STV1, STV2, STV3) fonction de la durée d'une excitation ou d'une non excitation de la bobine, et correspondant respectivement à une température d'environnement de compresseur.

8. Procédé selon l'une au moins des revendications précédentes, **caractérisé en ce que** la mesure de la résistance de bobine s'effectue dans le cas d'une non excitation de la bobine.

9. Procédé selon l'une au moins des revendications précédentes, **caractérisé en ce que** dans l'appareil de commande est mémorisé un modèle de température de compresseur reproduisant un comportement en température du compresseur et indiquant une loi de variation de la température de bobine en fonction d'une température de compresseur, et **en ce que** l'on détermine à partir de la température de bobine, la température d'environnement de compresseur au moyen du modèle de température de bobine et du modèle de température de compresseur.

10. Procédé selon l'une au moins des revendications précédentes, **caractérisé en ce que** le modèle de température de bobine présente des lois de variation de température de bobine fonction de la durée d'une excitation ou d'une non excitation du compresseur, et correspondant respectivement à une température d'environnement de compresseur.

11. Agencement de compresseur d'un système de suspension pneumatique de véhicule de tourisme, pour la mise en oeuvre d'un procédé selon l'une au moins des revendications précédentes, l'agencement de compresseur comprenant un compresseur d'air comprimé destiné à être alimenté en air environnant ou ambiant et un appareil de commande électronique, le compresseur d'air comprimé comprenant une bobine électrique, qui est une bobine magnétique d'une électrovanne, et l'appareil de mesure étant conçu pour permettre la mesure d'une résistance de bobine fonction de la température, et l'appareil de commande électronique déterminant, à partir de la résistance de bobine mesurée, une température de bobine, et l'appareil de commande électronique déterminant à partir de la température de bobine, la température d'environnement de compresseur (t_{KU}), au moyen d'un modèle de température de bobine en mémoire dans l'appareil de commande, qui reproduit un comportement de température de la bobine implantée dans l'environnement du compresseur, et indique une loi de variation de la température de bobine en fonction de la température d'environnement de compresseur (t_{KU}).
